# FASCICULE DE BREVET EUROPEEN

(11) **EP 3 469 836 B1**
(45) Date de publication et mention de la délivrance du brevet: **28.07.2021**
(21) Numéro de dépôt: 17733495.0
(22) Date de dépôt: 30.05.2017
(51) Int. Cl.: H04W 24/10, H04W 48/18, H04W 88/06

(54) **PROCEDE DE TRANSMISSION DE DONNEES ENTRE UN VEHICULE ET UNE UNITE DE STOCKAGE DEBARQUEE**
VERFAHREN ZUR ÜBERTRAGUNG VON DATEN ZWISCHEN EINEM FAHRZEUG UND EINER EXTERNEN SPEICHEREINHEIT
METHOD OF TRANSMITTING DATA BETWEEN A VEHICLE AND AN OFF-BOARD STORAGE UNIT

(30) Priorité: 09.06.2016 FR 1655321
(43) Date de publication de la demande: 17.04.2019
(73) Titulaire: PSA Automobiles SA, 78300 Poissy (FR)
(72) Inventeur: DISABLEU, Arnauld, 95150 Taverny (FR)
(74) Mandataire: Jeannin, Laurent Jean-Pierre
(86) Numéro de dépôt international: PCT/FR2017/051342
(87) Numéro de publication internationale: WO 2017/212140

(56) Documents cités:
- US-A1- 2014 254 543
- ARUNA BALASUBRAMANIAN ET AL: "Augmenting mobile 3G using WiFi", PROCEEDINGS OF THE 8TH INTERNATIONAL CONFERENCE ON MOBILE SYSTEMS, APPLICATIONS, AND SERVICES (MOBISYS 2010), SAN FRANCISCO, CALIFORNIA, USA, JUNE 15-18, 2010, ACM, NEW YORK, NY, 15 juin 2010 (2010-06-15), pages 209-222, XP058254767, DOI: 10.1145/1814433.1814456 ISBN: 978-1-60558-985-5

## Description

### Domaine Technique:

La présente invention concerne de manière générale un procédé de transmission de donnée entre une unité de transmission montée sur un véhicule automobile et une unité de transmission de données débarquée du véhicule, et en particulier l'invention concerne la transmission de données entre le véhicule et une unité de transmission débarquée lorsque plusieurs modes de connexion entre ces deux éléments sont possibles (connexion téléphonique du type 2G, 3G, ou 4G, connexion sans fil de proximité du type WiFi, ou même connexion filaire). Il est entendu que le mode de connexion choisi pour faire la transmission de données peut influencer le temps, la qualité et le coût de l'opération.

### État de la technique antérieure:

Il est connu dans l'art antérieur de prévoir un mode de connexion sans fil du type WiFi entre un véhicule et une unité de transmission de données pour réduire les coûts, tel que le document CN203313421U le décrit. En contrepartie, ce système présente notamment l'inconvénient de nécessiter de placer le véhicule à proximité d'une borne WiFi pour permettre la transmission de données, ce qui peut être impossible ou alors se produire longtemps après un besoin de transmission de données. En conséquence, le moment de transmission ou de mise à jour est incertain. On connait par le document ARUNA BALASUBRAMANIAN ET AL: "Augmenting mobile 3G using WiFi", PROCEEDINGS OF THE 8TH INTERNATIONAL CONFERENCE ON MOBILE SYSTEMS, APPLICATIONS, AND SERVICES (MOBISYS 2010), SAN FRANCISCO, CALIFORNIA, USA, JUNE 15-18, 2010, ACM, NEW YORK, NY, 15 June 2010 (2010-06-15), pages 209 - 222, XP058254767, ISBN: 978-1-60558-985-5, un système pour augmenter les capacités d'une connexion 3G à l'aide d'un accès WiFi. On connait également le document US 2014/254543 A1 (ENGELHARD LARS [DE] ET AL) publié le 11 septembre 2014 et qui divulgue un procédé selon lequel la transmission de données tel que le téléchargement d'une mise à jour logiciel d'un système non-critique d'un véhicule, est retardée afin d'utiliser un mode de connexion particulier (par exemple WLAN ou LTE), plutôt que le mode de connexion actuellement disponible (par exemple GSM fourni) et ce afin de garantir cette transmission de données à une qualité et à un coût optimaux.

Un but de la présente invention est de répondre aux inconvénients des documents de l'art antérieur mentionnés ci-dessus et en particulier, tout d'abord, de proposer un procédé de transmission de données entre un véhicule et une unité de transmission débarquée qui permette de garantir une transmission de données dans des conditions optimales de coût et de qualité.

### Résumé de l'invention:

L'invention est définie par les revendications. Pour cela un premier aspect de l'invention concerne un procédé de transmission de données entre un véhicule et une unité de stockage de données débarquée du véhicule, comprenant les étapes consistant à :
- mémoriser des modes de connexion possibles entre le véhicule et l'unité de stockage de données débarquée du véhicule disponibles au cours d'une période de temps prédéterminée,
- repérer des rythmes des modes de connexion au cours de la période de temps prédéterminée,
- retarder une transmission de données en fonction des rythmes des modes de connexion repérés, pour attendre d'avoir un mode de connexion préféré à celui disponible à un instant où la transmission de données est décidée.

Le procédé selon l'invention, au cours d'une période de test suffisamment longue (comme une semaine par exemple), repère les instants ou moments répétitifs où le véhicule retrouve les mêmes modes de connexion. Par exemple, la nuit, le véhicule est garé dans un garage familial avec une connexion WiFi disponible, le matin de 8h30 à 9h00 et le soir de 17h30 à 18h00 tous les jours de la semaine, le véhicule circule sur une route isolée avec seulement une connexion téléphonique de type 2G disponible, et de 9h à 17h30, le véhicule est en ville avec une connexion téléphonique du type 4G disponible. Si un besoin de transmission de données est identifié à 8h45, le procédé retarde la transmission effective jusqu'à 18h15, pour pouvoir utiliser la connexion WiFi au lieu d'une connexion du type 2G alors disponible. Ainsi, un instant de transmission peut être prévu et planifié, sans pour autant causer des coûts de transmission.

Avantageusement, le mode de connexion préféré est un mode de connexion avec une vitesse de transmission plus rapide et/ou un coût de transmission plus faible que celui disponible à l'instant où la transmission est décidée.

Avantageusement, avant l'étape consistant à retarder la transmission de données, il est prévu une étape consistant à déterminer en fonction du volume et/ou de l'importance des données à transmettre s'il est possible de retarder la transmission de données. Le procédé catégorise les données à transmettre avant de décider de retarder ou non la transmission de données. Par exemple, il ne sera jamais retardé de transmettre des données d'appel d'urgence, ou de demande de diagnostic en cas de panne immobilisant le véhicule, mais on peut retarder aisément une demande de mise à jour d'un organe non prioritaire tel qu'un système multimédia ou de confort du véhicule, une demande de mise à jour d'optimisation de performance ou de fonctionnement non prioritaire. On peut aussi décider de retarder systématiquement (pour autant que ce ne soit pas un appel d'urgence) des transmissions de données volumineuses telles qu'un temps de transmission avec le mode de connexion actuel disponible serait trop long (supérieur à 10 minutes par exemple).

Avantageusement, il est prévu une étape consistant à informer un utilisateur du véhicule que des données sont à transmettre et/ou une étape consistant à inviter l'utilisateur à améliorer le mode de connexion actuel pour transmettre les données. On peut prévoir d'informer de la transmission nécessaire et/ou d'inviter l'utilisateur à se rapprocher d'une borne WiFi par exemple.

Avantageusement, il est prévu une étape consistant à inviter l'utilisateur à autoriser la transmission des données.

Avantageusement, il est prévu de mémoriser une position du véhicule en même temps que les modes de connexion possibles, et il est prévu de retarder l'échange de données seulement si le véhicule est à une distance d'un lieu avec le mode de connexion préféré inférieure à une distance prédéterminée. Ce cas de figure permet de ne pas retarder la transmission de données si l'utilisateur se trouve loin de son domicile (100km par exemple), ce qui signifie que les rythmes précédemment identifiés ne seront pas respectés dans un futur proche.

Avantageusement, même si le mode de connexion préféré n'est pas obtenu à un instant planifié de connexion en fonction des rythmes des modes de connexion, il est prévu de lancer l'échange de données après un temps d'attente à partir de l'instant planifié de connexion. Ce cas de figure permet de ne pas retarder la transmission de données si les rythmes précédemment identifiés ne sont pas respectés (retard de plus d'une heure par rapport à l'instant prévu de connexion par exemple).

Avantageusement, le procédé de transmission de données est mis en œuvre par une unité de calcul embarquée dans le véhicule.

Avantageusement, il est prévu de ne pas retarder la transmission de données si le mode de connexion préféré n'est pas prévu d'être obtenu avant une durée prédéterminée. On peut prévoir de faire quand même la transmission de données si l'instant planifié de connexion avec le mode préféré est prévu dans plus de 8 heures par exemple, mais on peut prévoir de retarder un peu pour obtenir un meilleur mode de connexion que celui actuellement disponible.

Un deuxième aspect de l'invention concerne un véhicule automobile comprenant une unité de transmission embarquée agencée pour transmettre des données avec une unité de transmission débarquée du véhicule par le procédé selon le premier aspect de l'invention.

Avantageusement, le véhicule automobile comprend une unité de calcul embarquée agencée pour mettre en œuvre le procédé selon le premier aspect de l'invention.

### Brève description des figures:

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un schéma de transmission de données entre un véhicule automobile et une unité de transmission débarquée ;
- la figure 2 représente un historique des modes de connexion rencontrées par le véhicule de la figure 1, au cours d'une période de temps prédéterminée.

### Exposé détaillé de l'invention:

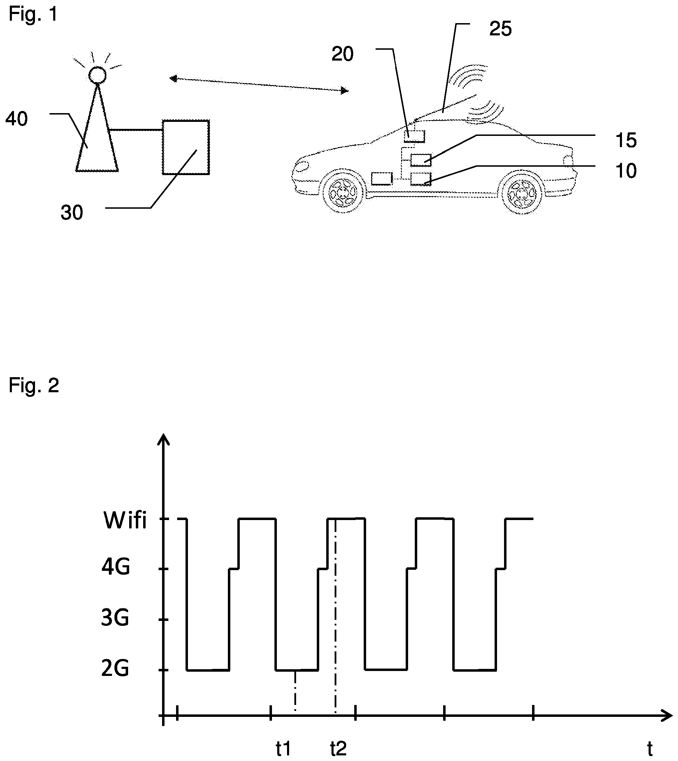

La figure 1 représente un véhicule comprenant une unité de transmission embarquée 20 reliée à une antenne 25, pour échanger des données avec une unité de transmission débarquée 40.

Les données échangées ou transmises peuvent concerner des données stockées dans un système de navigation 15, ou dans un calculateur moteur 10 par exemple. De plus, une unité de stockage débarquée 30 peut stocker des données plus récentes que celles présentes dans le véhicule et qu'il faut transférer vers le véhicule.

Typiquement, les modes de connexion entre le véhicule de la figure 1 et l'unité de transmission 40 sont des modes de connexion sans fil, tels qu'une connexion téléphonique, selon une norme 2G, 3G, ou 4G, ou encore une connexion sans fil de proximité tel qu'une communication selon un ensemble de protocoles de communication sans fil régis par les normes du groupe IEEE 802.11 (ISO/CEI 8802-11), autrement appelé WiFi.

Cependant, il est possible également d'avoir un mode de connexion filaire, en particulier par courant porteur en ligne, dans le cas où le véhicule est un véhicule hybride ou électrique rechargeable qui est raccordé régulièrement au réseau électrique filaire pour une recharge batterie.

La figure 2 représente le suivi des modes de connexion rencontrés par le véhicule lors d'une période s'étendant sur plusieurs jours. On constate que des rythmes de connexion peuvent être identifiés, et que ces modes de connexion présentent des vitesses, coûts et qualités de transmission différents. Par exemple, une connexion par WiFi est bien plus rapide et moins coûteuse qu'une connexion téléphonique 2G.

En conséquence, l'invention propose d'identifier ces rythmes de connexion au préalable pendant une période d'apprentissage sur plusieurs jours (une semaine par exemple).

Ensuite, si un besoin de transmission de données est identifié et qu'il est décidé de transmettre des données à un instant t1, le procédé selon l'invention va alors constater qu'à l'instant t1, la vitesse de connexion est basse, alors que son coût est élevé. De plus, grâce à la phase d'apprentissage, le procédé a identifié qu'une période avec une mode de connexion WiFi commencera dans quelques heures, à l'instant t2.

En conséquence, il est décidé de retarder la transmission de données jusqu'à l'instant t2. En conséquence, le téléchargement ou l'envoi de données sera rapide et gratuit à cet instant t2.

Il est possible de pondérer cette décision de retarder la transmission de données en fonction de la taille des données, ou de leur importance, ou encore en fonction de la position du véhicule. En effet, si ce dernier se trouve à plus de 100 km du lieu habituel où le WiFi est accessible, il y a de fortes chances que le véhicule ne s'y trouvera pas à l'instant prévu, et il peut être décidé tout de même de lancer la transmission de données.

On peut aussi prévoir de lancer tout de même la transmission de données si le mode de connexion préféré n'est pas obtenu au moment où ce dernier est censé être disponible. En d'autres termes, si la connectivité attendue n'est pas atteinte, une stratégie permet de se reconfigurer pour lancer immédiatement le téléchargement.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, la figure 2 ne représente que des modes de connexion sans fil, mais on peut envisager aussi d'avoir des modes de connexion filaires (lors d'une recharge batterie régulière par exemple).

## Revendications

1. Procédé de transmission de données entre un véhicule et une pluralité d'unités de transmission de données débarquées (40) du véhicule, le procédé étant mis en œuvre par une unité de calcul embarquée au sein du véhicule et comprenant les étapes consistant à :
- mémoriser des modes de connexion possibles (2G, 3G, 4G, Wi-Fi, filaire) entre le véhicule et la pluralité d'unités de transmission de données débarquées (40) du véhicule disponibles au cours d'une période de temps prédéterminée,
- repérer des rythmes des modes de connexion au cours de la période de temps prédéterminée,
- retarder une transmission de données en fonction des rythmes des modes de connexion repérés, pour attendre d'avoir un mode de connexion préféré à celui disponible à un instant où la transmission de données est décidée,
le procédé étant **caractérisé en ce qu'**il est prévu de mémoriser une position du véhicule en même temps que les modes de connexion possibles, et dans lequel il est prévu de retarder l'échange de données seulement si le véhicule est à une distance d'un lieu avec le mode de connexion préféré inférieure à une distance prédéterminée.

2. Procédé de transmission de données selon la revendication précédente, dans lequel, avant l'étape consistant à retarder la transmission de données, il est prévu une étape consistant à déterminer en fonction du volume et/ou de l'importance des données à transmettre s'il est possible de retarder la transmission de données.

3. Procédé de transmission de données selon l'une des revendications précédentes, dans lequel il est prévu une étape consistant à informer un utilisateur du véhicule que des données sont à transmettre et/ou une étape consistant à inviter l'utilisateur à améliorer le mode de connexion actuel pour transmettre les données.

4. Procédé de transmission de données selon l'une des revendications précédentes, dans lequel il est prévu une étape consistant à inviter l'utilisateur à autoriser la transmission des données.

5. Procédé de transmission de données selon l'une des revendications précédentes, dans lequel, même si le mode de connexion préféré n'est pas obtenu à un instant planifié de connexion en fonction des rythmes des modes de connexion, il est prévu de lancer l'échange de données après un temps d'attente à partir de l'instant planifié de connexion.

6. Procédé de transmission de données selon l'une des revendications précédentes, dans lequel, il est prévu de ne pas retarder la transmission de données si le mode de connexion préféré n'est pas prévu d'être obtenu avant une durée prédéterminée.

7. Véhicule automobile comprenant une unité de transmission embarquée agencée pour transmettre des données avec une unité de transmission débarquée (30) du véhicule et comprenant également une unité de calcul embarquée agencée pour mettre en œuvre les étapes d'un procédé selon l'une des revendications précédentes.

## Patentansprüche

1. Verfahren zum Übertragen von Daten zwischen einem Fahrzeug und einer Vielzahl von fahrzeugfernen Datenübertragungseinheiten (40), wobei das Verfahren durch eine fahrzeuginterne Recheneinheit innerhalb des Fahrzeugs implementiert wird und die folgenden Schritte umfasst:
- Speichern möglicher Verbindungsmodi (2G, 3G, 4G, Wi-Fi, kabelgebunden) zwischen dem Fahrzeug und der Vielzahl der während einer vorbestimmten Zeitspanne verfügbaren Off-Board-Datenübertragungseinheiten (40) des Fahrzeugs,
- Verfolgung von Mustern von Verbindungsmodi über den vorgegebenen Zeitraum,
- Verzögern einer Datenübertragung gemäß den Mustern der identifizierten Verbindungsmodi, um zu warten, bis ein bevorzugter Verbindungsmodus zu einem Zeitpunkt verfügbar ist, zu dem die Datenübertragung entschieden wird, wobei das Verfahren **dadurch gekennzeichnet ist, dass** vorgesehen ist, eine Position des Fahrzeugs zusammen mit den möglichen Verbindungsmodi zu speichern, und wobei vorgesehen ist, den Datenaustausch nur dann zu verzögern, wenn sich das Fahrzeug in einer Entfernung von einem Ort mit dem bevorzugten Verbindungsmodus befindet, die geringer ist als eine vorbestimmte Entfernung.

2. Verfahren zum Übertragen von Daten nach dem vorhergehenden Anspruch, wobei vor dem Schritt des Verzögerns der Datenübertragung ein Schritt vorgesehen ist, in dem anhand des Umfangs und/oder der Wichtigkeit der zu übertragenden Daten bestimmt wird, ob eine Verzögerung der Datenübertragung möglich ist.

3. Verfahren zur Datenübertragung nach einem der vorhergehenden Ansprüche, wobei ein Schritt vorgesehen ist, einen Benutzer des Fahrzeugs darüber zu informieren, dass Daten übertragen werden sollen, und/oder ein Schritt, den Benutzer aufzufordern, den aktuellen Verbindungsmodus zur Übertragung der Daten zu verbessern.

4. Verfahren zum Übertragen von Daten nach einem der vorhergehenden Ansprüche, wobei ein Schritt vorgesehen ist, in dem der Benutzer aufgefordert wird, die Übertragung der Daten zuzulassen.

5. Datenübertragungsverfahren nach einem der vorhergehenden Ansprüche, wobei auch dann, wenn der bevorzugte Verbindungsmodus nicht zu einer geplanten Verbindungszeit gemäß den Rhythmen der Verbindungsmodi erreicht wird, vorgesehen ist, den Datenaustausch nach einer Wartezeit ab der geplanten Verbindungszeit zu starten.

6. Verfahren zur Datenübertragung nach einem der vorhergehenden Ansprüche, wobei vorgesehen ist, die Datenübertragung nicht zu verzögern, wenn der bevorzugte Verbindungsmodus nicht vor einer vorgegebenen Zeit zu erwarten ist.

7. Kraftfahrzeug mit einer bordseitigen Übertragungseinheit, die dazu eingerichtet ist, Daten mit einer fahrzeugexternen Übertragungseinheit (30) zu übertragen, und mit einer bordseitigen Recheneinheit, die dazu eingerichtet ist, die Schritte eines Verfahrens nach einem der vorhergehenden Ansprüche durchzuführen.

## Claims

1. A method of transmitting data between a vehicle and a plurality of vehicle off-loaded data transmission units (40), the method being implemented by an on-board computing unit within the vehicle and comprising the steps of :
- storing possible connection modes (2G, 3G, 4G, Wi-Fi, wired) between the vehicle and the plurality of vehicle off-board data transmission units (40) available over a predetermined period of time,
- tracking the rhythms of the connection modes over the predetermined period of time,
- delaying a data transmission according to the patterns of the identified connection modes, to wait until a preferred connection mode is available at a time when the data transmission is decided, the method being **characterised in that** provision is made to store a position of the vehicle together with the possible connection modes, and wherein provision is made to delay the data exchange only if the vehicle is at a distance from a location with the preferred connection mode less than a predetermined distance.

2. The method of data transmission according to the preceding claim, wherein before the step of delaying the data transmission, a step of determining in dependence on the volume and/or importance of the data to be transmitted whether it is possible to delay the data transmission is provided.

3. A method of transmitting data according to any of the preceding claims, wherein there is provided a step of informing a user of the vehicle that data is to be transmitted and/or a step of prompting the user to improve the current connection mode to transmit the data.

4. A method of transmitting data according to any of the preceding claims, wherein there is provided a step of prompting the user to allow transmission of the data.

5. The data transmission method according to any of the preceding claims, wherein, even if the preferred connection mode is not obtained at a scheduled connection time according to the rhythms of the connection modes, provision is made to start the data exchange after a waiting time from the scheduled connection time.

6. The method of transmitting data according to any of the preceding claims, wherein, it is provided not to delay the data transmission if the preferred connection mode is not expected to be obtained before a predetermined time.

7. A motor vehicle comprising an on-board transmission unit arranged to transmit data with an off-board transmission unit (30) of the vehicle and also comprising an on-board computing unit arranged to implement the steps of a method according to any of the preceding claims.
